# EUROPEAN PATENT APPLICATION

(11) **EP 1 641 137 A1**
(43) Date of publication of application: **29.03.2006**
(21) Application number: 04736060.7
(22) Date of filing: 04.06.2004
(51) Int. Cl.: H04B 3/54, H04L 29/06, H04L 12/52, H04L 27/26

(54) **METHOD ENABLING MULTIPLE COMMUNICATION NODES TO ACCESS A TRANSMISSION MEANS ON AN ELECTRICAL GRID**

(30) Priority: 18.06.2003 ES 200301422
(71) Applicant: Diseno de Sistemas en Silicio S.A., 46980 Paterna (Valencia) (ES)
(72) Inventor: BLASCO CLARET, Jorge, Vicente, E-46020 Valencia (ES); RIVEIRO INSUA, Juan, Carlos, E-46019 Valencia (ES); ARLANDIS MALONDA, Diego, E-46780 Oliva (ES); IRANZO MOLINERO, Salvador, E-46008 Valencia (ES); MATAS BONILLA, Alejandro, E-46017 Valencia (ES)
(74) Representative: Ungria Lopez, Javier
(86) International application number: PCT/ES2004/000257
(87) International publication number: WO 2004/112273

(57) **Abstract**

Method enabling multiple communication nodes to access a transmission means on an electrical grid, which permits access in a fair manner by nodes on a shared medium such as the electrical network, achieving the maximum access speed when there are no collisions between reservation requests and the detection of coexistence signals in a robust way in noisy environments. It is **characterized by** the use of signals for reservation (5) and release (10) of the communication and by the random waiting prior to a reservation of the electrical network with minimum and maximum values fixed in advance.

## Description

### OBJECT OF THE INVENTION

As stated in the title of this specification, the present invention refers to a transmission medium access procedure of multiple communication nodes over electrical network.

The procedure of the invention is applicable to communication systems using the electrical network as shared medium for communication among their nodes.

The aim of this procedure is to achieve an access system to the electrical network for nodes which follow the procedure, in a manner that is efficient, equitable and with the minimum consumption of resources.

### BACKGROUND TO THE INVENTION

In the majority of telecommunications systems a process of access to the medium needs to be carried out in such a way that the different nodes using it obtain fair and equitable access. In the case of the electrical network, the problem is aggravated because different systems have to coexist using different technologies for the data transmission. The procedure of the invention solves these problems by means of using certain specific signals which are easy to generate and detect and a procedure for reservation and release of the channel. Once a node has reserved the channel by means of that procedure, it can use any method of data transmission known in the state of the art.

During the course of the description the acronyms OFDM (orthogonal frequency division mutliplexing) and DFT (discrete Fourier transform) are used, that are known in the state of the art. Also the acronyms SOT and EOT are used to refer to start of transmission and end of transmission signals respectively.

In the state of the art there exist multiple ways of carrying out the process of access to the medium, such as the ALOHA protocol, slotted ALOHA, the CSMA protocol (carrier sense multiple access) with detection of collisions or CSMAs which prevent collisions, token-passing protocols and many others. Also known is the use of a random waiting time (backoff time) which increases with the number of losses, like the one appearing in the ANSI/IEEE 802.11 standard, to be found in IEEE Std 802.11-1997 Part II: Wireless LAN medium access control (MAC) and physical layer (PHY) specifications", but this mode of coexistence has as its main drawback the fact that users have to know the quantity of information to transmit before making a reservation request. This presents the added drawback that all the nodes have to be capable of demodulating the reservation signals in order to know how much information is going to be transmitted, which increases the complexity of those signals. The invention described in this document solves this problem with release signals which are sent by the transmitter and by the receiver in order to notify that the channel can again be reserved by other users at any moment.

Regarding the start and release signals, US patent 6111919 titled "Synchronization of OFDM signals" describes certain signals similar to those used in the procedure of the invention which are used for the synchronization of OFDM signals by means of a comparison with a fixed reference, due to which the carriers of the base signal also have fixed values, which constitutes a use completely different from that of the invention. In the procedure of the invention, the signals are used for detecting their reception without using any time reference at all since the instant of reception has an indetermination of various OFDM symbols and does not have the necessary precision for synchronizing OFDM signals. In order to improve the functioning in selective channels in frequency, the sums of phase increments in subranges of frequencies are also calculated. Another difference is that various thresholds are used in reception for detecting the signal if the threshold is exceeded in various consecutive measurements, which is similar to carrying out a time correlation. The duration of the signals is also a variable for improving the probability of detection by exploiting that time correlation.

In the procedure of the invention, information is sent in the signals since a distinction can be made between two types: SOT and EOT, which could potentially consist of more types by alternating the signs of the base signal in a different way. In the said patent a displacement of phases to the output of the DFT, which is necessary for synchronizing, is also carried out, but this is not used in the procedure of the invention.

The procedure of the invention also uses digital band translation, which provides it with greater flexibility since the symmetry of the signals can be maintained in the channel or not.

### DESCRIPTION OF THE INVENTION

In order to achieve the objectives and avoid the drawbacks stated in the above sections, the invention consists of an access procedure to the transmission medium of multiple communication nodes on electrical network, comprising communication between different systems using the electrical network as a communications channel, an access protocol to the medium and certain signals for carrying out that protocol. This protocol is characterized in that two different signals are used (coexistence signals); one a start of transmission, SOT, and the other an end of transmission, EOT, in order to reserve and release the channel respectively, and which all the systems present in the network are capable of detecting. Also, when a node wishes to access the channel it waits for the release of the channel and it then starts a contention period in which the node waits a random amount of time before sending a SOT in order to reserve the channel or it desists if it detects a SOT before its waiting time has expired. Once a node has reserved the channel with a SOT it has a maximum amount of time for transmitting information, after which it has to transmit an EOT.

In the procedure of the invention, a node considers a channel to be released when an EOT signal is received or when the amount of time passed since the SOT for reservation of the channel or the moment of initialization of the node is greater than a predetermined maximum amount of time known as the occupation time of the channel.

Once the channel is released, the node selects the waiting time before sending a SOT randomly between a minimum value and a maximum value which depends on the priority of the data to transmit, the congestion of the channel and the previous use of the channel by that node.

If a node tried to transmit information and lost that contention when receiving a SOT during the selected waiting time, the waiting time of the selected period immediately afterwards will not be random but will instead be the remaining time of the waiting time of the immediately preceding contention.

So that the reservation of the channel can be effective for nodes that are visible to a transmitter and a receiver, the two nodes involved in the communication send channel reservation and release signals, SOT and EOT, in the channel previously reserved by the transmitter node.

Moreover, and in order to prevent that the detection of possible false release signals causes an interruption in the communication, filtering is performed of the release signals, EOT, received during communication periods for data and data acknowledgement from the transmitter to the receiver and from the receiver to the transmitter once the reservation of the channel has been made.

Furthermore, the random waiting value in the contention is obtained from one or more bits of the analogue to digital converter in order to achieve a totally random value, depending on the noise of the signal in the channel.

Once the channel has been reserved with a SOT, the node transmits a request to send frame (RTS) to the destination node.

When a destination node receives a request to send frame (RTS) it transmits a control frame in order to accept the transmission (CTS), provided that the channel was not previously reserved due to the reception of the transmission request (RTS).

In the case of the RTSs crossing, in other words, a node receives a request to send frame (RTS) from the node to which it has previously transmitted an RTS on having reserved the channel, this node will transmit a control frame for accepting the transmission (CTS) provided its MAC address is less than that of the destination node.

In any case, when a node receives a CTS from the node to which it was transmitting an RTS, it will transmit a data frame. Moreover, when a node receives a data frame from the node to which it transmitted a CTS, that node transmits an acknowledgement frame for the received data and an EOT, completing the communication.

In the case of detecting an error in the communication with the receiver after making a reservation of the channel, in other words, the node it is communicating with does not reply or does not accept the transmission, the maximum waiting value of the following contentions in the transmitting node is increased.

In the case that the reservation of the channel and the communication with the receiver is completed without errors, the maximum waiting value is adjusted to its initial value in the transmitter node.

Once the communication is ended, the channel is released with a release signal. The transmitter node sends a release signal for the channel, EOT, when it receives an acknowledgement frame from the node to which it transmitted data after making the reservation of the channel, or it sends it a certain moment previously calculated in such a way that the release signals for the channel of the transmitter and receiver node coincide in a certain previously set time window.

The channel reservation signal, SOT, consists of repeating the same base signal n times, while the EOT release signal consists of repeating the same base signal n times but alternating the signs in each repetition. In a similar way, other signals are generated using different repetition patterns of the base signal, such as (+ - -), (+ + - -), etc., so that more than two coexistence signals can be used when necessary.

In order to improve the detection of the signals in reception, the base signal consists of an OFDM signal whose frequency carriers are set to a random value if those frequencies are used for transmitting data or to zero otherwise.

If two or more nodes use different frequency ranges, they can simultaneously access the transmission medium since the reservation signals of one of them will not be detected by the others.

In this way, the detection of SOT and EOT signals consists of carrying out consecutive DFTs on the received signal, calculating the phase difference of a carrier between one DFT and the previous one, and adding all the phase differences in the carriers occupying frequencies used by the receiver node, with a SOT being detected if the sum is below a threshold or an EOT if the sum is above another threshold.

In order to optimize the detection, the sum is made of the phase differences by frequency subranges within the band used by the receiver, with detection in one subrange being sufficient for detecting the signal.

In order to maximize the possibility of detection, various different thresholds are used for each signal and which have to be given during various sums of consecutive phase differences in order to detect the signal, with the detection of one threshold being sufficient for detecting the signal. This is similar to carrying out a time correlation.

In addition, the first and last samples of the base signal are multiplied in time by a raised cosine window, while in reception the samples entering the DFT are multiplied by a hanning window or similar.

In order to increase the flexibility of the system, a frequency translation is carried out of the base signal in transmission and reception.

The same signal used for the reservation of the channel, the SOT, is also used for other devices such as the functioning of the automatic gain control (AGC) . When using this symbol in the functioning of the automatic gain control, the system is capable of altering the amplitude of the signal without this affecting the probability of detection of the symbols, since just the phase information is used for the detection of the SOT.

Thanks to the procedure of the invention, a fair coexistence is achieved among all units wishing to access the shared medium, in such a way that the maximum access speed is achieved when there are no collisions between reservation requests. Also, when carrying out the channel reservation, the transmitter does not need to know in advance how much information it is going to transmit, thanks to the use of EOT release signals. Moreover, nor is it necessary for all the nodes to use the same modulation technique for transmitting the data, thus permitting the coexistence of different technologies by applying the procedure of the invention. The manner of carrying out those signals is also advantageous since, thanks to it, the detection of reservation and release signals can be done correctly in very noisy environments or ones with a low signal to noise ratio (SNR) thanks to the repetition of the same base signal and detection by means of multiple thresholds.

Below, in order to facilitate a better understanding of this specification and forming an integral part thereof, some figures are included in which the object of the invention has been represented in a manner that is illustrative rather than limiting.

### BRIEF DESCRIPTION OF THE FIGURES

**Figure 1.**- Represents a real example in which the nodes are connected to different sections of the low voltage electrical network and have mutual visibility.
**Figure 2.**- Represents a graph with the maximum waiting periods according to the number of retransmissions that are necessary.
**Figure 3.**- Represents a typical case of data transmission after which node A carries out the random waiting and the RTS/CTS transmission is done.
**Figure 4.-** Represents the special case in which two transmission requests from two nodes cross each other, and the way in which this is resolved.
**Figure 5.**- Represents an embodiment of the reservation (SOT) and release (EOT) signals for the channel starting from a certain base signal.
**Figure 6.**- Shows a block diagram in reception for the detection of the signals needed for the coexistence.
**Figure 7.**- Represents the windowing of the symbols received by means of the diagram shown in figure 6.
**Figure 8.**- Graphically shows the shape of the sum of phases of the received signal and the location of the detection thresholds of the coexistence signals.

### DESCRIPTION OF AN EMBODIMENT OF THE INVENTION

Given below is a description of an example of the invention, making reference to the numbering adopted in the figures.

In an example embodiment of the invention, the shared medium is the electrical network to which all the nodes of the system are connected. There also exists a block (1) in each node which is in charge of sharing the medium and carrying out the contentions, and which has to follow the same process as that stated in this invention.

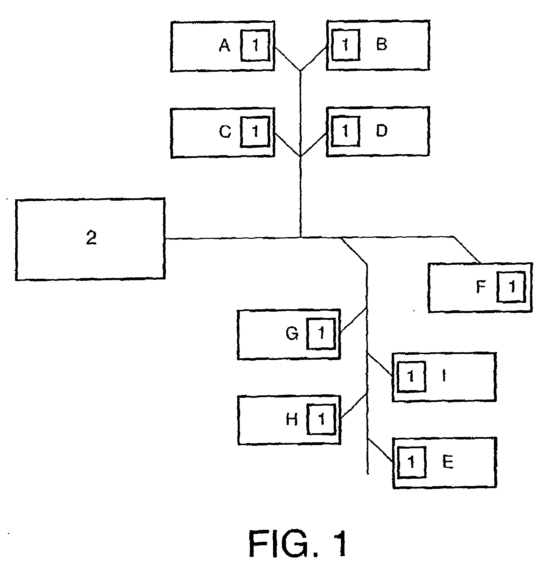

This can be seen in figure 1, where the nodes A, B, C, D, E, F, G, H and I are connected to the same section of the low voltage electrical network, coming after a medium voltage to low voltage transformer (2) for the electrical cables.

Each of the nodes shown in the figure has a block (1), which carries out the procedure of the invention in order to achieve suitable access to the medium.

To summarize, when a node wishes to transmit data, it sends an order to its contention block (1). Stated in that order will be the priority of the message it wishes to send, this priority being limited in this example of the invention between 0 and 7, where 0 indicates the maximum priority and 7 is the minimum priority. The invention provides for the sending of a start of transmission (SOT) signal and another for end of transmission (EOT), as will be described, and therefore it is not necessary to indicate what the size of the packet to send is since, thanks to these signals, the reservations are efficiently carried out without this information.

When the channel is free, either because the contention block for the node has received an EOT or because an amount of time has passed greater than a certain value defined as "maximum channel occupation time", without receiving a SOT, which is the maximum time a node can be transmitting in the channel after which it is forced to transmit an EOT, the channel contention will begin.

In that moment, the contention block chooses a random value between a minimum value and a maximum value determined by the priority. In this example of embodiment, a random value is chosen between 1 and 2ⁿ - 1, where n is a value depending on the priority and on the number of retransmissions made. This value "n" is limited between a minimum value and a maximum value for each priority and is initially set to its minimum value in order to guarantee that the channel contentions will last the minimum possible when no collisions are produced with other reservation requests.

In an embodiment of the invention, the value of "n" depends on the priority according to a table known to all the nodes carrying out the process of the invention and which, in this example of embodiment, would be similar to the following:

| | | Priority | | | | | | | |
|---|---|---|---|---|---|---|---|---|---|
| | | 0 | 1 | 2 | 3 | 4 | 5 | 6 | 7 |
| Value of Value of "n" | Initial | Initial | 5 | 5 | 4 | 4 | 4 | 3 | 3 |
| | Minimum | 5 | 5 | 5 | 4 | 4 | 4 | 3 | 3 |
| | Maximum | 9 | 8 | 7 | 9 | 8 | 7 | 8 | 7 |

In this example of embodiment, the initial value is made equal to the minimum in order to optimize the process of access to the channel when there are no collisions with other nodes, and the maximum value is limited in order to prevent that the fall of nodes or links leads the nodes to have overly long waiting times.

So that the contention block (1) achieves a genuinely random value in this example, instead of being pseudo-random, this value is obtained with a displacement register which takes the last bit of the analogue to digital converter, which is the one most dependent on the thermal noise of the line. A simple way of obtaining a maximum value of 2ⁿ - 1 consists, in one implementation, of choosing "n" bits of this displacement register.

The contention block will wait an amount of time equal to the random value obtained multiplied by a time window, which in the example of the invention is equal to the size in samples of a channel reservation signal, SOT. If, during that period of time, the contention block does not receive any SOT, it will consider that it has gained the contention and transmits a SOT. On the other hand, if it receives a SOT, it will consider than it has lost the contention and will note down the remaining waiting time.

If a new contention is made later on with the same priority, the remaining value of the waiting time will be used instead of taking a random value. In this way, the more transmission attempts with the same priority with a SOT received during the waiting time, the more probability of accessing the channel.

It is necessary to reserve the channel both in reception and in transmission in order to prevent the existence of transmissions colliding with the communication that is going to be made. To achieve this, both the transmitter and the receiver will send the channel reservation and release signals. Once the communication between transmitter and receiver starts, and in order to prevent noises from the channel producing false detections of EOTs, those release signals are filtered, preventing them from reaching the contention block.

It is possible that, although the transmitter node has gained the contention, the receiver node is unable to reply, either because it has detected another communication or because it is not active. For this reason, after reserving the channel with a SOT signal, a process of transmission request and acceptance is carried out. This SOT signal is also used for carrying out automatic gain control (AGC) in reception. By doing this outside the data sending process, the amplitude of the signal can be changed without affecting the detection probability of the data sent.

The transmitter node will send a request to send frame (RTS) to the receiver, and in the case that the latter will be able to make the communication, it will in its turn send an acceptance frame (CTS) to that transmitter. Once the communication is confirmed, the transmitter will start to transmit the data, and afterwards the receiver node will transmit an acknowledgement frame for that data.

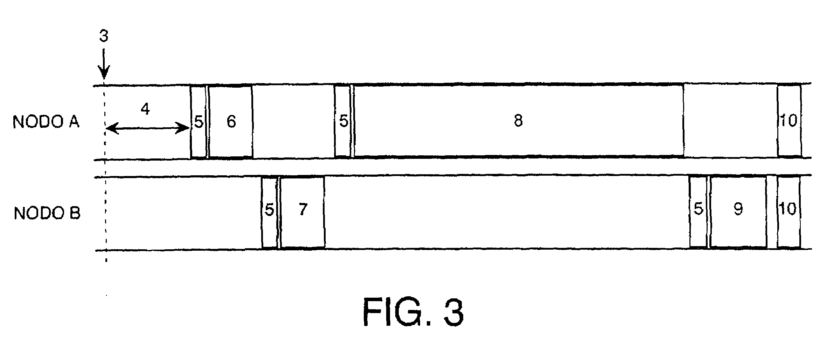

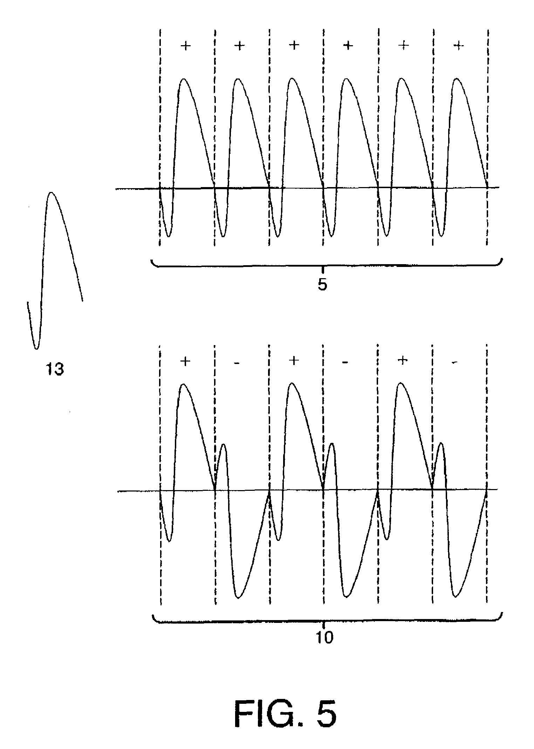

Figure 3 shows a process of transmission request and acceptance without failures. At the beginning, marked as (3), the channel is released, either due to reception of an EOT or because the maximum channel occupation time has passed without having received a SOT. At that moment, node A is waiting to send information to node B, due to which it randomly selects a waiting time (4) in accordance with the priority and the retransmissions of packets with that priority, as was described. Once the waiting time has passed without receiving any reservation signal, it sends the SOT signal (5) and then a request to send frame (6) (RTS) to node B. Node B receives the request (5) and accepts it, sending a SOT (5), in order to keep the channel reserved, and a clear to send frame for the transmission (7) (CTS) to node A. When node A receives the acceptance (CTS) (7) it sends the data frame (8) preceded by another SOT (5) and afterwards, on receiving the data, node B sends the acknowledgement frame (9) preceded by another SOT (5). Finally, nodes A and B transmit an EOT release signal (10) at the same instant in order to allow new communications for the nodes which can receive that signal.

In an embodiment, and exploiting the characteristics of the SOT, when a node initiates the transmission of any type of frame it first of all sends that signal, on the basis of which an automatic adjustment is made to the gain in reception in order to compensate the attenuation produced by the channel on the transmitted frame.

When a node reserves the channel and transmits an RTS and the receiver node transmits a CTS, both nodes will filter the release signals, EOT, in order to prevent false detection of these signals from interrupting the communication which has now been set up. The filtering of EOT will become disabled once more when the two nodes release the channel by transmitting an EOT or when an error occurs in the communication.

The use of the RTS/CTS protocol for request and validation of the transmission is entirely optional, and another type of protocol can be used or none at all once the reservations have been made with the coexistence signals that have been described. Also, the data and the RTS and CTS frames can be modulated with any kind of modulation that is comprehensible for some of the nodes of the network, this being independent of the use of the coexistence signals presented.

There exists a special case in which two nodes compete and gain a channel when they want to send information between them. In this case, the RTSs will cross over in the channel and, if they are received correctly, they could produce two CTSs and multiple collisions. In order to prevent this, and in the event of crossing of RTS signals, just the node receiving the RTS and which has a MAC address, medium access address, less than that of the destination will send the CTS.

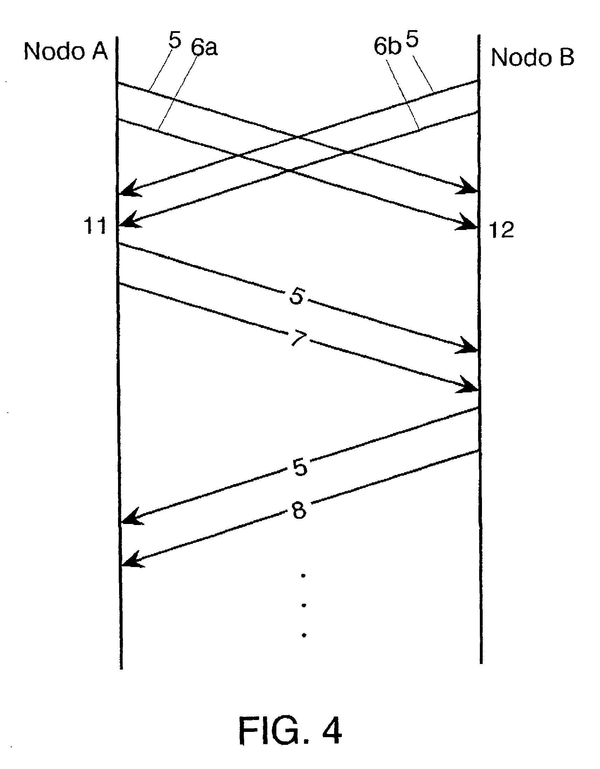

This special case is shown in figure 4. In this case, the transmission requests (6a) and (6b) of nodes A and B cross over. At moment (11) the RTS (6b) arrives from node B to node A, and at moment (12) the RTS (6a) arrives from node A to B. Both had tried to access the channel and are waiting for a CTS (7) from the other node, so they check their MAC addresses and as the address of node A is less than that of node B, it sends a CTS and its reservation is forgotten. Node B receives it and continues its normal transmission with the sending of the SOT signal (5) and the data (8).

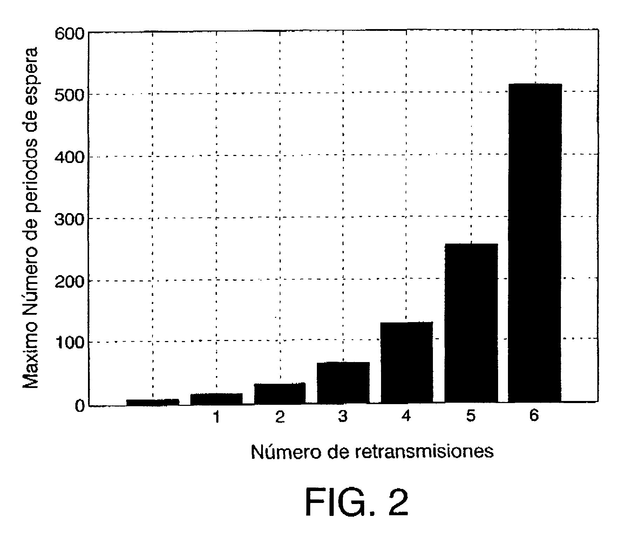

If an error is detected in the communication and it has not been possible to make that communication following the channel reservation, in other words, when the receiver does not respond to the RTS with a CTS, the transmitter notes that the contention has been lost and increases the value of "n" for calculating the next waiting time for that priority. Said value of "n" is limited by a maximum depending on the priority. This can be seen in figure 2, where each column shows the maximum waiting time that can be selected for a fixed priority. It can be checked that said maximum value increases exponentially according to the number of retransmissions necessary for accessing the channel.

When the communication is completed correctly, if the value of "n" for the priority of the communication was not at its initial value, in other words, errors have occurred in the communication in previous situations, then the value of "n" will be returned to its initial value, which is also dependent on the priority.

As mentioned earlier, both the transmitter and the receiver have to send the SOT and EOT signals. The SOT signals are sent prior to the RTS, CTS, data and acknowledgement frames, while for the EOT signals there exist two possibilities: either the receiver sends it after the acknowledgement frame and the transmitter when it receives it, or a certain moment is calculated previously in both ends of the communication in order to send that signal at the same time. This second method is preferable so that the release of the channel can be simultaneous for nodes which are only able to receive signals from the transmitter and nodes which are only able to receive signals from the receiver.

As was described, in order to implement this medium access procedure, two signals are needed for making the reservation (SOT 5) and release (EOT 10) of the channel. These signals have to have certain characteristics for being used in the electrical network, among which can be mentioned a high sensitivity in frequency selective channels in, short duration, easy generation and detection and resistance to the noises present in the electrical network.

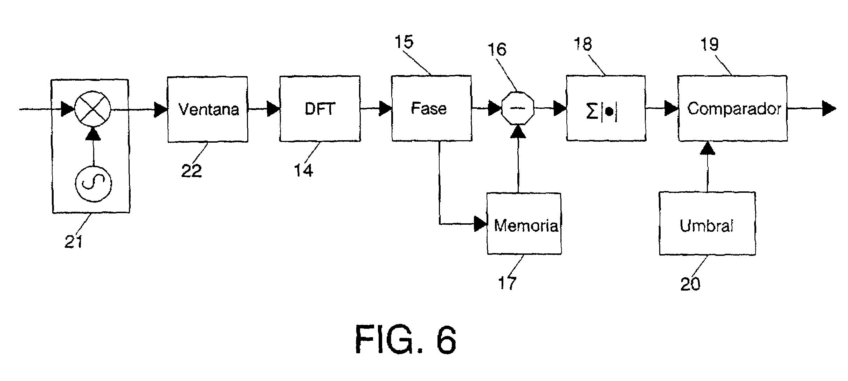

For this, the SOT (5) and EOT (10) signals are defined starting from a base signal (13) which is repeated K times, as shown for example in figure 5. Depending on the signs used in each repetition, the SOT (5) or the EOT (10) is generated. The SOT (5) corresponds to K repetitions of the signal with the same sign, while the EOT (10) corresponds to K repetitions but alternating the sign in each repetition, in other words, the base signal is transmitted as it is and then it is transmitted inverted, and so on until completing the K repetitions. In this way, the signals can be generated in time starting from a memory containing the samples of the base signal and which is read K times in order to generate the signals. Said figure 5 shows an example of generation of these signals starting from a base signal where the value chosen for K is 6.

The procedure also allows the sending of more signals using other sign patterns in the repetition of the base signal. For example, in an implementation in which it would be necessary to distinguish between more than two users, some patterns could be (+ + - -) or (+ + + - +).

The number of repetitions can be configured in order to allow a compromise between the duration of the signal and the probability of detection. In other words, the greater the number of repetitions the greater the sensitivity (it increases 3 dB each time the duration of the signal is duplicated) at the cost of a greater duration of the signal, which means it takes longer to carry out the protocol.

The base signal can also be generated in frequency as an OFDM signal. This has the advantage of being able to exactly determine the frequencies occupied by SOT and EOT signals. In order to generate the base signal, the carriers can be set to zero in the frequencies that are not wished to be used and to a random value in the others. This random value will normally consist of a constant magnitude and a random phase so that all the carriers used have the same power. In this way, the SOT and EOT signals are transmitted only in the frequencies used by the system for transmitting data. This represents a great advantage because a node will only reserve the channel in the frequencies it wants to use, and in this way two nodes using non-overlapping frequency ranges can transmit simultaneously since they share the medium by means of frequency division, thus maximizing the use of the channel. If the frequency ranges overlap wholly or partially the nodes will detect the reservation and release signals and access to the medium will be done by time division in accordance with the procedure described in the invention.

In order to attenuate the side lobes of the signal more rapidly, the base signal is multiplied in time by a raised cosine window. In this way, the out of band radiation of the signals is reduced and detection of signals between nodes having different frequency ranges is avoided, with which the medium can be accessed simultaneously, since if the frequencies used by the two systems are not separated sufficiently, false detections of SOTs or EOTs could occur due to the side lobes, when each one should never be able to detect the other signals since they are using different frequencies. By using the window, the minimum separation for not detecting the channel reservation and release signals between nodes using different frequency ranges is reduced.

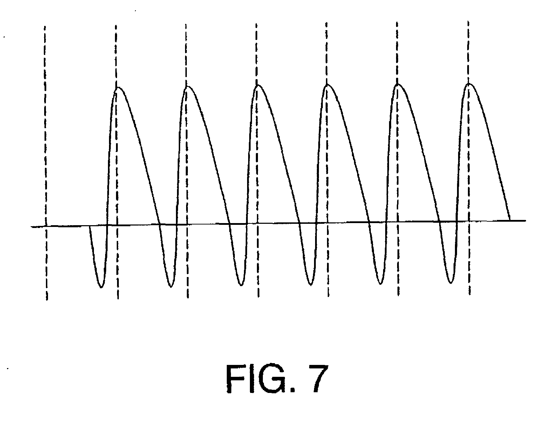

In order to detect signals in reception consecutive DFTs are calculated over the received signal. In order to calculate these DFTs no synchronization is necessary between the transmitter and receiver, since it does not matter at which moment the process starts. This can be clearly seen in Figure 7, which shows the signal received and the windowing performed by the DFT. This windowing clearly does not correspond to that done in transmission, but the properties of the signal are maintained since each DFT is performed on the same signal and it does not matter if it is not exactly equal to the original base signal, since the detector does a comparison between one signal and the next. Figure 6 shows a block diagram for a receiver, which includes a DFT block (14). After that, the phase is calculated by means of a block (15) in each of the carriers, which is subtracted (16) from the phase in the previous symbol, which was stored in a memory (17). The absolute value of those phase differences is then calculated and they are summed (18) in order to then be compared (19) with a threshold (20). If a SOT was sent the phase differences will be close to zero since the DFT is calculated on the same signal, and therefore the signal will be detected when the sum of phase differences is below the threshold. In the case of EOT the opposite occurs, the phase differences will be around 180° and the signal will be detected when the sum of phases is above the threshold. For a correct functioning of the system the number of repetitions of the base signal needs to be greater than or equal to 3, since in this way we ensure that there will always be two DFTs performed on the same signal independently of the receiver window. When the detector works on the noise received from the channel, the phase differences are uniformly distributed in the interval between 0° and 180° and when performing the sum of differences the result is a Gaussian distribution, in accordance with the Central Limit Theorem, with a mean of 90° and a variance that is less the higher the number of phases summed. The thresholds are determined in order to minimize the probability of false detection and maximize the sensitivity. In this entire process only the carriers corresponding to the frequencies used by the receiver are processed.

In order to improve the functioning of the detector in frequency selective channels, the carriers exiting from the DFT can be divided into subgroups, in accordance with their position in frequency, and the sums of phases can be carried out in each of those subgroups. Detection of the signal in just one of the subgroups is sufficient, since it corresponds to the case in which just these frequencies are received with sufficient level above the noise.

Another possible improvement is to carry out a time correlation between the sums of phase differences. Given that the base signal is sent various consecutive times, when performing the DFT in the receiver the sum of phases will fulfil with the detection conditions during various consecutive symbols. In other cases, the threshold will not be reached but it will be observed that the sum of phases approaches it during various consecutive symbols. This fact can be exploited in order to select a second threshold, somewhat bigger in the case of the SOT and somewhat smaller for the EOT, which will detect the signal in the event that it is reached in two consecutive symbols. Similarly, the same can be done with three consecutive symbols and so on.

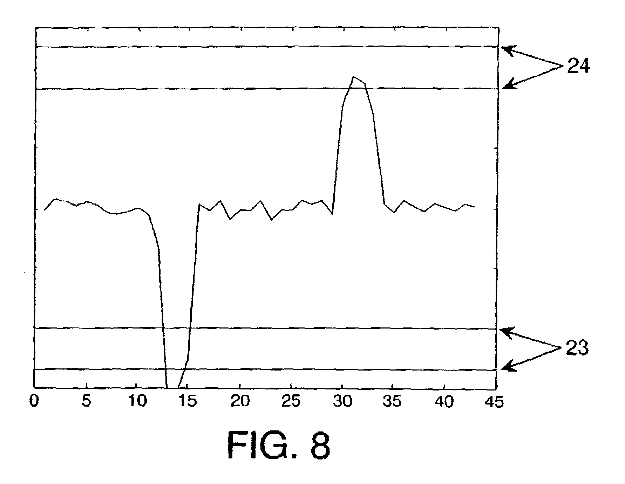

The functioning is observed in figure 8, which represents the result of the sum of phases during various consecutive symbols. Four lines can also be seen (23, 24) which represent the thresholds, the lower two (23) being for the SOT and the upper two (24) for the EOT. It can be seen that the sum of phases initially has an intermediate value between the thresholds, which indicates that neither of the two signals is being received, but between symbol 10 and 15 it drops, meaning that a SOT has been received which in this case would be detected with both thresholds. Later on, between symbol 30 and 35, a rise is detected corresponding to the EOT. In this case, it is just detected with the second threshold since during two consecutive symbols the sum of phases is maintained above that threshold.

In reception, the samples entering the DFT are multiplied by a hanning or similar type window, with which the probabilities of false detection of the SOT and EOT are equalized. This is represented by means of a window block (22) in Figure 6.

In transmission and reception a digital band translation is done as represented by means of a block (21) for the case of the receiver. This gives the system more flexibility since it permits the signal to be located in any frequency range. Another advantage is that the symmetry of the signals can be maintained following the band translation or not. In the first case the systems using the band translation and systems which work in base-band can detect the signals, while if the symmetry is not maintained they will only be detected by systems carrying out the band translation in reception, in the same way as the signals transmitted in base band will only be detected by nodes receiving in base-band. In this way, systems with band translation and without band translation can share the channel by means of the procedure of the invention or can function as two independent groups.

As has been seen, the receiver at no time uses the amplitude information in each carrier, and this allows the signals to be received while gain adjustments are being made in the receiver. These adjustments will affect the amplitude of the carriers but not their phase. The design of the amplifier for the receiver must be done in such a way that the phase of the transfer function does not vary between the different gains.

## Claims

1. **METHOD ENABLING MULTIPLE COMMUNICATION NODES TO ACCESS A TRANSMISSION MEANS ON AN ELECTRICAL GRID,** comprising communication among different systems using the electrical network as communications channel, an access protocol to the medium and some signals for carrying out that protocol, **characterized in that**
- two different signals are used; one a start of transmission (SOT) (5), and other an end of transmission (EOT) (10), in order to reserve and release a channel respectively, and which all the systems present in the network are capable of detecting;
- when a node wishes to access the channel it waits for the release of the channel (3) and then establishes a contention period (4) in which the node carries out an action selectively between waiting a random length of time before sending a start of transmission (SOT) signal (5) in order to reserve the channel, and desisting from making a reservation if it detects a start of transmission (SOT) signal (5) before its waiting time (4) has expired; and
- once a node has reserved the channel with a start of transmission (SOT) signal (5) a maximum amount of time is established for transmitting information, after which an end of transmission (EOT) signal (10) is transmitted.

2. **METHOD ENABLING MULTIPLE COMMUNICATION NODES TO ACCESS A TRANSMISSION MEANS ON AN ELECTRICAL GRID,** according to claim 1, **characterized in that** a node considers the channel (3) to be released when it receives an end of transmission (EOT) signal (10).

3. **METHOD ENABLING MULTIPLE COMMUNICATION NODES TO ACCESS A TRANSMISSION MEANS ON AN ELECTRICAL GRID,** according to claim 1, **characterized in that** a node considers the channel (3) to be released when selectively the time passed since a start of transmission (SOT) signal (5) for reservation of the channel is greater than a predetermined maximum occupation time of the channel, or when the time passed since the moment of initialization of the node is greater than that maximum occupation time of the channel and no start of transmission (SOT) signal (5) has been received.

4. **METHOD ENABLING MULTIPLE COMMUNICATION NODES TO ACCESS A TRANSMISSION MEANS ON AN ELECTRICAL GRID,** according to claim 1, **characterized in that** the waiting time (4) of a node before sending a start of transmission (SOT) signal (5) is randomly selected between a minimum value and a maximum value which depends on the priority of the data to transmit, the congestion of the channel and the previous use of the channel by that node.

5. **METHOD ENABLING MULTIPLE COMMUNICATION NODES TO ACCESS A TRANSMISSION MEANS ON AN ELECTRICAL GRID,** according to claim 1, **characterized in that** the waiting time (4) is selected as being the time remaining for ending the selected random time of the immediately preceding contention, when a node tried to transmit information and lost that contention when receiving a start of transmission (SOT) signal (5) during said selected waiting time.

6. **METHOD ENABLING MULTIPLE COMMUNICATION NODES TO ACCESS A TRANSMISSION MEANS ON AN ELECTRICAL GRID** according to claim 1, **characterized in that** the two nodes involved in a communication send channel reservation (SOT) (5) and release (EOT) (10) signals, in the channel previously reserved by the transmitter node.

7. **METHOD ENABLING MULTIPLE COMMUNICATION NODES TO ACCESS A TRANSMISSION MEANS ON AN ELECTRICAL GRID,** according to claim 1, **characterized in that** the release signals (EOT) (10) received during the periods of communication of data (8) and data acknowledgement (9) from the transmitter to the receiver and from the receiver to the transmitter are filtered once the reservation of the channel has been made.

8. **METHOD ENABLING MULTIPLE COMMUNICATION NODES TO ACCESS A TRANSMISSION MEANS ON AN ELECTRICAL GRID,** according to claim 1, **characterized in that** the random waiting value in a contention (4) is obtained from one or more bits of the analogue to digital converter.

9. **METHOD ENABLING MULTIPLE COMMUNICATION NODES TO ACCESS A TRANSMISSION MEANS ON AN ELECTRICAL GRID,** according to claim 1, **characterized in that** when a node accesses a channel after transmitting a start of transmission (SOT) signal (5) it transmits a request transmission frame (RTS) (6) to the destination node.

10. **METHOD ENABLING MULTIPLE COMMUNICATION NODES TO ACCESS A TRANSMISSION MEANS ON AN ELECTRICAL GRID,** according to claim 9, **characterized in that** when a node receives a request to send frame (RTS) (7) it transmits a control frame in order to accept the transmission (CTS) (7), provided the channel is not previously reserved when receiving that request to send frame (RTS) (6).

11. **METHOD ENABLING MULTIPLE COMMUNICATION NODES TO ACCESS A TRANSMISSION MEANS ON AN ELECTRICAL GRID,** according to claim 9, **characterized in that** when a node receives a request to send frame (RTS) (6) from the node to which it has previously transmitted a request to send frame (RTS) (6) after having reserved the channel, it transmits a control frame for accepting the transmission (CTS) (7) provided its MAC (Medium Access Control) address is less than that of the destination node.

12. **METHOD ENABLING MULTIPLE COMMUNICATION NODES TO ACCESS A TRANSMISSION MEANS ON AN ELECTRICAL GRID,** according to claims 10 or 11, **characterized in that** when a node receives a control frame accepting a transmission (CTS) (7) from the node to which it transmitted a request to send frame (RTS) (6), it transmits a data frame (8).

13. **METHOD ENABLING MULTIPLE COMMUNICATION NODES TO ACCESS A TRANSMISSION MEANS ON AN ELECTRICAL GRID,** according to claim 12, **characterized in that** when a node receives a data frame (8) from the node to which it transmitted a control frame for accepting the transmission (CTS) (7), that node transmits an acknowledgement frame for the received data (9) and an end of transmission (EOT) signal (10), completing the communication.

14. **METHOD ENABLING MULTIPLE COMMUNICATION NODES TO ACCESS A TRANSMISSION MEANS ON AN ELECTRICAL GRID,** according to claim 4, **characterized in that** the maximum waiting value of the following contentions in a transmitter node is increased when an error is detected in the communication with the receiver after making a channel reservation.

15. **METHOD ENABLING MULTIPLE COMMUNICATION NODES TO ACCESS A TRANSMISSION MEANS ON AN ELECTRICAL GRID,** according to claim 14, **characterized in that** the maximum waiting time is adjusted to an initial value in a transmitter node when a channel reservation has been made and the communication with the receiver is completed without errors.

16. **METHOD ENABLING MULTIPLE COMMUNICATION NODES TO ACCESS A TRANSMISSION MEANS ON AN ELECTRICAL GRID,** according to claim 13, **characterized in that** a transmitter node sends a release signal (EOT) (10) when it receives an acknowledgement frame (9) from the node to which it transmitted data (8) after having made a channel reservation.

17. **METHOD ENABLING MULTIPLE COMMUNICATION NODES TO ACCESS A TRANSMISSION MEANS ON AN ELECTRICAL GRID,** according to claim 13, **characterized in that** a transmitter node sends a release signal (EOT) (10) in a certain instant previously calculated so that the release signals (EOT) (10) from the transmitter and receiver node coincide in a previously set time window.

18. **METHOD ENABLING MULTIPLE COMMUNICATION NODES TO ACCESS A TRANSMISSION MEANS ON AN ELECTRICAL GRID,** according to claim 1, **characterized in that** the start of transmission (SOT) signal (5) consists of repeating the same base signal (13) n times.

19. **METHOD ENABLING MULTIPLE COMMUNICATION NODES TO ACCESS A TRANSMISSION MEANS ON AN ELECTRICAL GRID**, according to claim 1, **characterized in that** the end of transmission (EOT) signal (10) consists of repeating the same base signal (13) n times, alternating the signs in each repetition.

20. **METHOD ENABLING MULTIPLE COMMUNICATION NODES TO ACCESS A TRANSMISSION MEANS ON AN ELECTRICAL GRID,** according to claim 1, **characterized in that** different signals are generated in addition to those of start of transmission (SOT) (5) and end of transmission (EOT) (10) using different repetition patterns of a base signal (13).

21. **METHOD ENABLING MULTIPLE COMMUNICATION NODES TO ACCESS A TRANSMISSION MEANS ON AN ELECTRICAL GRID,** according to claims 18, 19 and 20, **characterized in that** the base signal (13) is an OFDM signal on whose frequency carriers an operation is carried out selected between setting them to a random value if those frequencies are used for transmitting data; and setting them to zero if those frequencies are not used for transmitting data.

22. **METHOD ENABLING MULTIPLE COMMUNICATION NODES TO ACCESS A TRANSMISSION MEANS ON AN ELECTRICAL GRID,** according to claim 21, **characterized in that** nodes which use different frequency ranges, simultaneously access the transmission medium.

23. **METHOD ENABLING MULTIPLE COMMUNICATION NODES TO ACCESS A TRANSMISSION MEANS ON AN ELECTRICAL GRID,** according to claim 21, **characterized in that** the detection of the start of transmission (SOT) (5) and the end of transmission (EOT) (10) signals consists of carrying out consecutive DFTs (14) (Discrete Fourier Transforms) on the received signal, calculating the difference (16) in phase (15) of a carrier between one DFT and the previous one (17), and adding all the phase differences in the carriers occupying the frequencies used by the receiver node (18), with a start of transmission (SOT) signal (5) being detected (19) if the sum is below a previously established threshold (23), and an end of transmission (EOT) signal (10) if the sum is above another previously established threshold (24).

24. **METHOD ENABLING MULTIPLE COMMUNICATION NODES TO ACCESS A TRANSMISSION MEANS ON AN ELECTRICAL GRID,** according to claim 23, **characterized in that** the sum of the phase differences (18) is made by frequency subranges within the band used by the receiver, with detection in one subrange being sufficient for detecting a signal of start of transmission (SOT) (5) or end of transmission (EOT) (10).

25. **METHOD ENABLING MULTIPLE COMMUNICATION NODES TO ACCESS A TRANSMISSION MEANS ON AN ELECTRICAL GRID,** according to claims 23 and 24, **characterized in that** various different thresholds (23) and (24) are used for each type of signal, start of transmission (SOT) signal (5) or end of transmission (EOT) signal (10) and which have to be given during various sums of consecutive phase differences (18) in order to detect the corresponding start or end of transmission signal, with detection of one threshold being sufficient for detecting said signal.

26. **METHOD ENABLING MULTIPLE COMMUNICATION NODES TO ACCESS A TRANSMISSION MEANS ON AN ELECTRICAL GRID,** according to claim 21, **characterized in that** the first and last samples of the base signal are multiplied in time by a raised cosine type window.

27. **METHOD ENABLING MULTIPLE COMMUNICATION NODES TO ACCESS A TRANSMISSION MEANS ON AN ELECTRICAL GRID,** according to claim 23, **characterized in that** in reception the samples entering the DFT (14) are multiplied by a hanning or similar type window (22).

28. **METHOD ENABLING MULTIPLE COMMUNICATION NODES TO ACCESS A TRANSMISSION MEANS ON AN ELECTRICAL GRID,** according to claim 21, **characterized in that** in transmission and reception, a frequency translation is carried out on the signal (21).

29. **METHOD ENABLING MULTIPLE COMMUNICATION NODES TO ACCESS A TRANSMISSION MEANS ON AN ELECTRICAL GRID,** according to claim 1, **characterized in that** the start of transmission (SOT) signal (5) is also used for carrying out automatic gain control (AGC).
